(19) Europäisches Patentamt
European Patent Office
Office européen des brevets

(11) **EP 4 722 863 A1**

(12) **EUROPEAN PATENT APPLICATION**
published in accordance with Art. 153(4) EPC

(43) Date of publication:
**08.04.2026 Bulletin 2026/15**

(21) Application number: **24815190.4**

(22) Date of filing: **14.05.2024**

(51) International Patent Classification (IPC):
*G06F 3/01* (2006.01)

(52) Cooperative Patent Classification (CPC):
**G06F 3/01**

(86) International application number:
**PCT/JP2024/017718**

(87) International publication number:
**WO 2024/247706 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.06.2023 JP 2023091685**

(71) Applicant: **Sony Group Corporation
Tokyo 108-0075 (JP)**

(72) Inventors:
• **TAKEDA Hirofumi
Tokyo 108-0075 (JP)**
• **NISHIGORI Shuichiro
Tokyo 108-0075 (JP)**
• **TOGURI Yasuhiro
Tokyo 108-0075 (JP)**

(74) Representative: **2SPL Patentanwälte PartG mbB
Landaubogen 3
81373 München (DE)**

(54) **INFORMATION PROCESSING DEVICE AND METHOD, AND PROGRAM**

(57) The present technology relates to an information processing apparatus, a method, and a program capable of suppressing perceptual degradation due to modulation.

The information processing apparatus determines a modulation frequency of a content signal on the basis of at least any one of a tactile perception characteristic for each presentation site, information regarding a non-modulated signal that is not modulated, and a user state, and performs modulation on the content signal using the modulation frequency. The present technology can be applied to a tactile presentation system of a tactile signal.

*FIG. 6*

EP 4 722 863 A1

**Description**

TECHNICAL FIELD

The present technology relates to an information processing apparatus, a method, and a program, and more particularly, to an information processing apparatus, a method, and a program capable of suppressing perceptual degradation due to modulation.

BACKGROUND ART

In recent years, techniques have been developed in which an apparatus worn by a user vibrates to give a tactile stimulus to the user. Here, the tactile stimulus refers to a physical phenomenon that causes the user to feel a tactile sensation by a vibration phenomenon or the like. In addition, generating a tactile stimulus is referred to as tactile presentation

Techniques for performing tactile presentation are used in equipment in various fields. For example, in a terminal apparatus including a touch panel such as a smartphone, the touch panel vibrates in response to a touch operation from the user and gives a tactile stimulus to the user's finger, so that a touch feeling on a button or the like displayed on the touch panel can be expressed.

For example, in a music listening apparatus such as a headphone, it is possible to emphasize a heavy bass in music being reproduced by giving a tactile stimulus in accordance with music reproduction.

For example, in an apparatus that provides a computer game, virtual reality (VR), or the like, the controller or the like is vibrated according to an operation using the controller or a content scene to give a tactile stimulus, so that it is possible to improve the user's sense of immersion in the content.

Furthermore, for example, techniques of giving a tactile stimulus to a user on the basis of a tactile signal received from an external apparatus have also been developed.

By the way, in tactile stimulation, there are a very wide variety of presentation apparatuses used for presentation, and the respective characteristics are greatly different. Therefore, a tactile sensation that can be presented by a certain apparatus cannot be presented by another apparatus. In addition, unintended auditory noise is generated due to vibration at the time of tactile presentation, which may impair the user experience more than the effect of tactile presentation.

As a solution therefor, use of amplitude modulation has been conventionally proposed. Amplitude modulation is a process of converting a component of a signal into a signal of a certain frequency. In particular, amplitude modulation that modulates a high frequency band to a resonance frequency of the tactile presentation apparatus or a sensitivity peak of a human can provide benefits such as absorption of a characteristic difference of the tactile presentation apparatus, an increase in driving efficiency, and reduction in auditory noise.

For example, Patent Document 1 discloses a technique of receiving device characteristics from a tactile presentation device and performing amplitude modulation in accordance with the device characteristics.

CITATION LIST

PATENT DOCUMENT

Patent Document 1: Japanese Patent Application Laid-Open No. 2019-67396

SUMMARY OF THE INVENTION

PROBLEMS TO BE SOLVED BY THE INVENTION

However, determining a modulation frequency in consideration of only a resonance characteristic of a tactile presentation apparatus or a sensitivity peak of a human fails to take into account, for example, a degree of perceptual quality deterioration (hereinafter, referred to as perceptual degradation) such as a change in tactile sense caused by amplitude modulation, and a difference in tactile perception characteristic depending on a presentation site and frequency of a tactile stimulus.

The present technology has been made in view of such a situation, and is intended to suppress perceptual degradation due to modulation.

SOLUTIONS TO PROBLEMS

An information processing apparatus according to one aspect of the present technology includes: a frequency determination unit that determines a modulation frequency of a content signal on the basis of at least any one of a tactile perception characteristic for each presentation site, information regarding a non-modulated signal that is not modulated, and a user state; and a modulation unit that performs modulation on the content signal using the modulation frequency.

An information processing apparatus according to another aspect of the present technology includes an encoding unit that encodes a content signal and generates an encoded signal including at least information indicating a presentation site, modulation intensity information, and a non-modulated signal that is not modulated.

In one aspect of the present technology, a modulation frequency of a content signal is determined on the basis of at least any one of a tactile perception characteristic for each presentation site, information regarding a non-modulated signal that is not modulated, and a user state, and modulation with the modulation frequency is executed on the content signal.

In another aspect of the present technology, a content signal is encoded, and an encoded signal including at least information indicating a presentation site, modulation intensity information, and a non-modulated signal that is not modulated is generated.

BRIEF DESCRIPTION OF DRAWINGS

Fig. 1 is a diagram illustrating tactile perception characteristics.
Fig. 2 is a block diagram illustrating a configuration example of a tactile presentation system according to an embodiment of the present technology.
Fig. 3 is a block diagram illustrating a configuration example of an encoding apparatus in Fig. 2.
Fig. 4 is a block diagram illustrating a configuration example of a tactile reproduction apparatus in Fig. 2.
Fig. 5 is a diagram illustrating a flow of processing of the tactile presentation system in Fig. 2.
Fig. 6 is a block diagram illustrating a configuration example of a modulation unit in Fig. 4.
Fig. 7 is a diagram illustrating a method of calculating a modulation allowable range.
Fig. 8 is a diagram illustrating a method of calculating a modulation frequency f.
Fig. 9 is a diagram illustrating a first processing example.
Fig. 10 is a diagram illustrating an example of a transmission data format.
Fig. 11 is a diagram illustrating a modification of the first processing in Fig. 9.
Fig. 12 is a diagram illustrating a second processing example.
Fig. 13 is a flowchart for explaining decoding and modulation processing of the tactile reproduction apparatus.
Fig. 14 is a block diagram illustrating a configuration example of a computer.

MODE FOR CARRYING OUT THE INVENTION

Hereinafter, modes for carrying out the present technology will be described. The description will be given in the following order.

1. Overview of Present Technology
2. Configuration
3. First Processing Example
4. Second Processing Example
5. Others

<1. Overview of Present Technology>

<Overview>

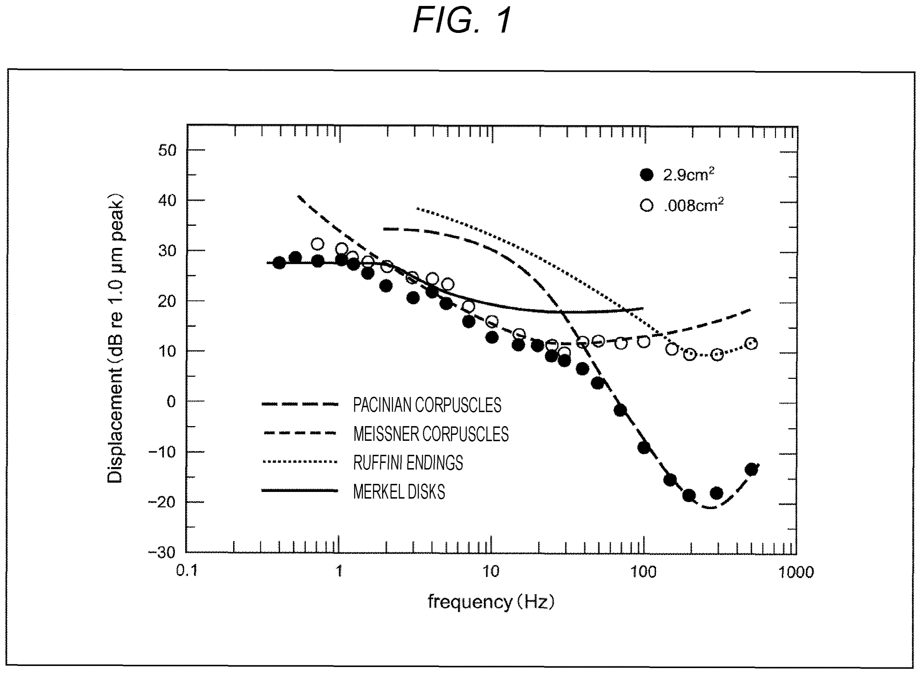

Fig. 1 is a diagram illustrating tactile perception characteristics.

Fig. 1 illustrates tactile perception characteristics for each frequency of Pacinian corpuscles, Meissner corpuscles, Ruffini endings, and Merkel disks.

Pacinian corpuscles, Meissner corpuscles, Ruffini endings, and Merkel disks are receptors.

As illustrated in Fig. 1, tactile perception characteristics differ in the most sensitive, i.e., dominantly responsive, receptor for each frequency.

In addition, tactile perception characteristics are also different for each receptor. Among the Pacinian corpuscles, Meissner corpuscles, Ruffini endings, and Merkel disks, only the Pacinian corpuscles respond at relatively high frequencies are the most insensitive receptors to frequency changes.

Therefore, in order to suppress perceptual quality deterioration (perceptual degradation) due to modulation such as change in tactile sensation caused by modulation, it is necessary to set the modulation frequency within a range in which Pacinian corpuscles insensitive to frequency change predominantly respond. In addition, in this perception mechanism, there is also a difference depending on a perceived site (hand, foot, back, or the like).

Furthermore, in a case where only a partial band of the tactile signal is modulated, the tactile signal includes a signal in a band to be modulated (hereinafter, referred to as a modulated signal) and a signal in a band not to be modulated (hereinafter, referred to as a non-modulated signal). Therefore, in a case where only a partial band of a tactile signal is modulated, if a signal in a band that is not modulated (hereinafter, referred to as a non-modulated signal) and the modulated signal overlap each other on the frequency axis, they interfere with each other, and an assumed waveform cannot be obtained, which also causes perceptual degradation. Here, as an example of the modulated signal and the non-modulated signal, it can be said that a high-frequency side to which known frequency division processing (such as a low-pass filter) is applied is a modulated signal, and a low-frequency side is a non-modulated signal. In addition, the entire band of the tactile signal may be modulated. In this case, since the non-modulated signal can be omitted from the encoded data, the data amount can be reduced accordingly.

Therefore, in the present technology, the modulation frequency is determined on the basis of at least any one of information regarding the tactile perception characteristics and the non-modulated signal and, in addition, the user state or the like.

As a result, it is possible to perform modulation while suppressing perceptual degradation while receiving benefits such as absorption of a perceptual characteristic difference due to modulation, noise reduction, and driving efficiency improvement.

<2. Configuration>

<System Configuration>

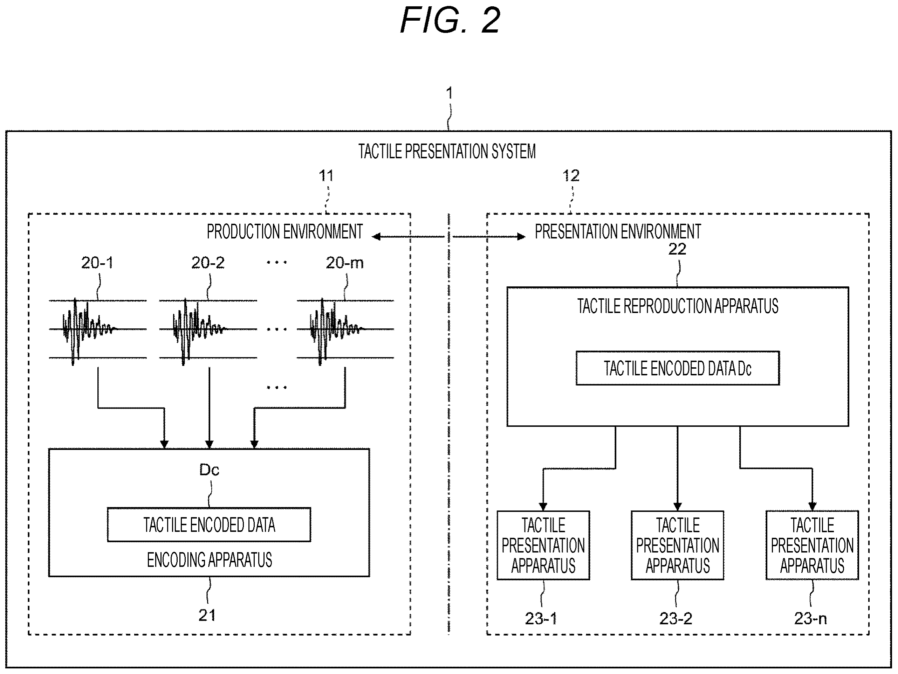

Fig. 2 is a block diagram illustrating a configuration example of a tactile presentation system according to an embodiment of the present technology.

In Fig. 2, a tactile presentation system 1 includes a production environment 11 and a presentation environment 12 as environments for realizing tactile presentation.

In the production environment 11, a tactile signal of content obtained by producing target tactile information (tactile stimulus) is encoded, and tactile encoded data Dc obtained by the encoding is acquired.

In the presentation environment 12, a tactile stimulus is presented on the basis of a tactile signal obtained by decoding the tactile encoded data Dc.

The tactile presentation system 1 of Fig. 2 includes an encoding apparatus 21 to which one or more tactile signals 20-1 to 20-m are input in the production environment 11, and includes a tactile reproduction apparatus 22 configured to be able to acquire tactile encoded data Dc in the presentation environment 12, and one or more tactile presentation apparatuses 23-1 to 23-n connected to the tactile reproduction apparatus 22.

Note that, in a case where it is not necessary to distinguish the tactile signals 20-1 to 20-m, they are simply referred to as tactile signals 20. In a case where it is not necessary to distinguish the tactile presentation apparatuses 23-1 to 23-n, they are referred to as tactile presentation apparatuses 23.

The waveform of the tactile signal 20 is typically artificially created by a creator. Note that an actual vibration signal obtained from a vibration sensor such as a piezo pickup or an acceleration sensor may be used as the tactile signal 20.

The encoding apparatus 21 includes, for example, a central processing unit (CPU), a digital signal processor (DSP), and the like, and encodes each tactile signal 20 according to a predetermined transmission data format. Then, the encoding apparatus 21 stores the tactile encoded data Dc obtained by encoding in, for example, a storage device provided inside.

The tactile reproduction apparatus 22 includes a CPU, a DSP, and the like, and acquires tactile encoded data Dc. For example, the tactile encoded data Dc encoded in the production environment 11 is acquired by the tactile reproduction apparatus 22 via a necessary network such as the Internet. Alternatively, the tactile encoded data Dc may be acquired by the tactile reproduction apparatus 22 via a portable storage medium in which the tactile encoded data Dc is recorded by the encoding apparatus 21.

The tactile reproduction apparatus 22 decodes the acquired tactile encoded data Dc, and drives each tactile presentation apparatus 23 on the basis of the tactile signal obtained by the decoding.

The tactile presentation apparatus 23 is a device that generates a tactile stimulus. In Fig. 2, the tactile presentation apparatus 23 includes, for example, a vibration device such as a vibrator or an actuator. In addition, each tactile presentation apparatus 23 in Fig. 2 may be attached to a different site of the human body of the recipient.

Note that the tactile presentation apparatus 23 may be an apparatus that is not attached to a site of a human body. For example, the tactile presentation apparatus 23 may include a convergent ultrasonic wave or an air cannon by a speaker array, a pressure presentation apparatus by controlling the amount of fluid in the apparatus, an electrical stimulation apparatus that directly stimulates a tactile receptor, or the like. Furthermore, a part of the tactile presentation apparatus 23 may be attached to a site of the human body, and the other part of the tactile presentation apparatus 23 may not be attached to the site of the human body.

<Configuration of Encoding Apparatus>

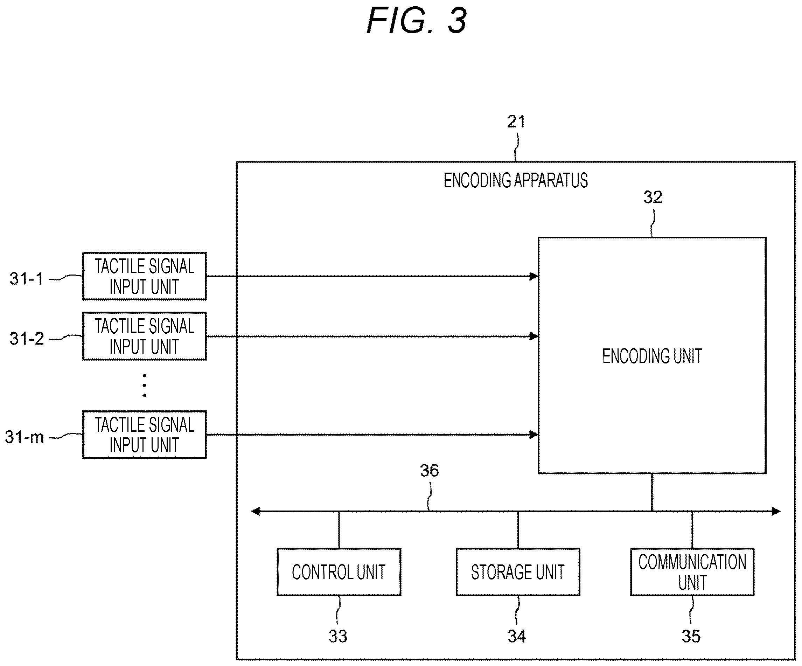

Fig. 3 is a block diagram illustrating a configuration example of the encoding apparatus 21 in Fig. 2.

The encoding apparatus 21 in Fig. 3 includes a plurality of tactile signal input units 31-1 to 31-m, an encoding unit 32, a control unit 33, a storage unit 34, a communication unit 35, and a bus 36. In a case where it is not necessary to distinguish the tactile signal input units 31-1 to 31-m, they are referred to as tactile signal input units 31.

Note that the encoding unit 32, the control unit 33, the storage unit 34, and the communication unit 35 are connected via the bus 36 and are configured to be able to perform data communication with each other.

The tactile signal input from the tactile signal input unit 31 is input to the encoding unit 32.

The encoding unit 32 includes, for example, a DSP. The encoding unit 32 encodes the input tactile signal according to a predetermined transmission data format to obtain tactile encoded data Dc. Note that details of the transmission data format will be described later.

The control unit 33 includes a microcomputer including, for example, a CPU, a read only memory (ROM), a random access memory (RAM), and the like, and performs overall control of the encoding apparatus 21 by executing processing according to a program stored in the ROM.

The control unit 33 can perform data communication with an external apparatus connected to a network via the communication unit 35. In particular, the control unit 33 can cause the tactile encoded data Dc obtained by the encoding unit 32 to be transmitted to the external apparatus via the communication unit 35.

The storage unit 34 includes a storage device such as a hard disk drive (HDD) or a solid state drive (SSD). The storage unit 34 is used for various data storage in the encoding apparatus 21. For example, the storage unit 34 stores data necessary for control by the control unit 33. Furthermore, the tactile encoded data Dc obtained by the encoding unit 32 may be stored in the storage unit 34 on the basis of the control of the control unit 33.

The communication unit 35 is configured to be able to perform data communication with an external apparatus via a network such as the Internet.

<Configuration of Tactile Reproduction Apparatus>

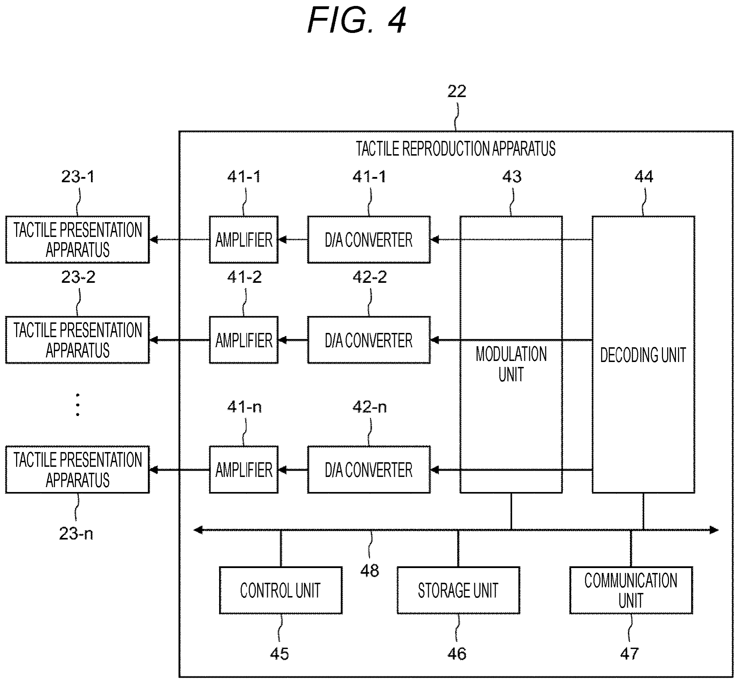

Fig. 4 is a block diagram illustrating a configuration example of the tactile reproduction apparatus 22 of Fig. 2.

In Fig. 4, the tactile reproduction apparatus 22 is illustrated together with a tactile presentation apparatus 23.

The tactile reproduction apparatus 22 includes a plurality of amplifiers 41-1 to 41-n, a plurality of digital to analog (D/A) converters 42-1 to 42-n, a modulation unit 43, a decoding unit 44, a control unit 45, a storage unit 46, a communication unit 47, and a bus 48. In a case where it is not necessary to distinguish the amplifiers 41-1 to 41-n and the D/A converters 42-1 to 42-n, the amplifiers are referred to as an amplifier 41 and a D/A converter 42, respectively.

Note that the modulation unit 43, the decoding unit 44, the control unit 45, the storage unit 46, and the communication unit 47 are connected via the bus 48 and are configured to be able to perform data communication with each other.

The control unit 45 includes, for example, a microcomputer including a CPU, a ROM, a RAM, and the like, performs overall control of the tactile reproduction apparatus 22, and performs control to present a tactile stimulus to the tactile presentation apparatus 23.

The storage unit 46 is, for example, a storage device similar to the storage unit 34 in Fig. 3, and is used to store various data used by the control unit 45 and the like.

The communication unit 47 is configured to be able to perform data communication with an external apparatus via a network such as the Internet. The tactile encoded data Dc transmitted from the encoding apparatus 21 is received by the communication unit 47.

The decoding unit 44 decodes the tactile encoded data Dc input via the communication unit 47 by a method described later to obtain a tactile signal for each tactile presentation apparatus 23. The tactile signal obtained by the decoding unit 44 is input to the modulation unit 43.

The modulation unit 43 determines a modulation frequency of the tactile signal obtained by the decoding unit 44 on the basis of the information encoded by the encoding unit 32 so as to efficiently drive the tactile reproduction apparatus 22 and reduce perceptual degradation, and modulates the decoded signal.

Each of the tactile signals having passed through the modulation unit 43 is input to one corresponding D/A converter 42, subjected to D/A conversion, adjusted to an appropriate dynamic range by one corresponding amplifier 41, and output to one corresponding tactile presentation apparatus 23. Note that, as described above, the D/A converter 42 corresponding to each tactile signal passing through the modulation unit 43 may be prepared, or each tactile signal may be processed collectively by a single D/A converter 42. Furthermore, a corresponding D/A converter 42 may be prepared for a part of each tactile signal, and the remaining tactile signals may be processed collectively by a single D/A converter 42.

As a result, each tactile presentation apparatus 23 is driven on the basis of the tactile signal, and the tactile stimulus created in the production environment can be given to the recipient.

Note that, although only the tactile signal has been described in the above description, it is also possible to have a configuration in which an audio signal or a video signal is recorded together with the tactile signal, and a sound or a video is provided together with the tactile information to the recipient.

<Flow of Processing of Tactile Presentation System>

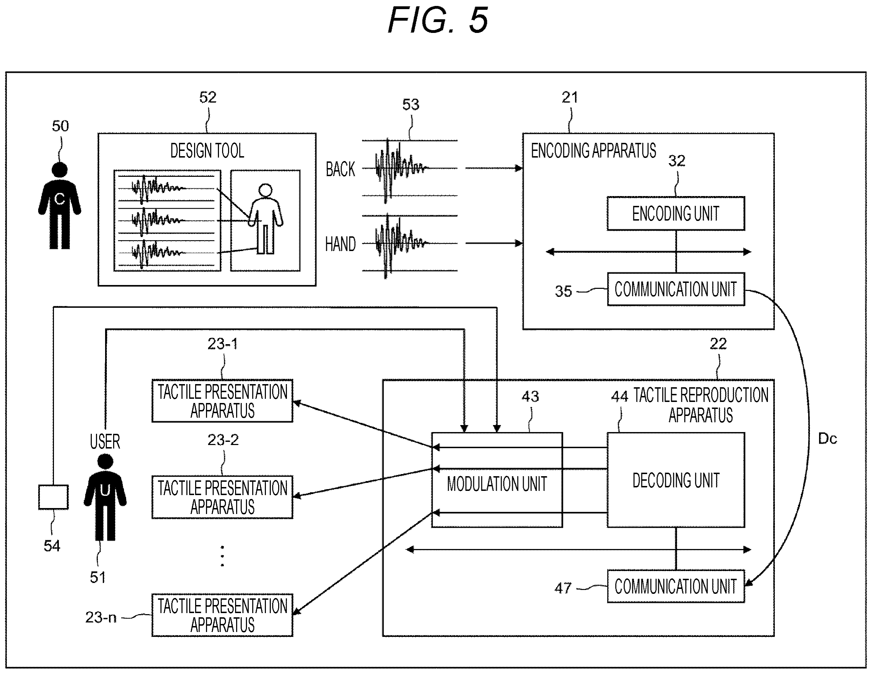

Fig. 5 is a diagram illustrating a flow of processing of the tactile presentation system 1.

Fig. 5 illustrates an example in which the tactile signal created by the creator 50 is encoded by the encoding apparatus 21, decoded by the tactile reproduction apparatus 22 possessed by the user 51, and a predetermined tactile sensation is presented.

The creator 50 creates the tactile signal 53 using a design tool 52. The created tactile signal 53 is associated with a presentation site to the user 51 in the design tool 52. The tactile signal 53 associated with the presentation site is input to the encoding apparatus 21.

The encoding apparatus 21 obtains tactile encoded data Dc multiplexed in the encoding unit 32. Thereafter, the tactile encoded data Dc is transmitted from the communication unit 35 to the tactile reproduction apparatus 22. At that time, the encoding unit 32 also encodes tactile site information indicating a presentation site associated with the tactile signal.

In the tactile reproduction apparatus 22, the communication unit 47 receives the tactile encoded data Dc, and the decoding unit 44 decodes the tactile encoded data Dc. On the basis of the decoded information, the tactile signal obtained by the decoding is transmitted to the tactile presentation apparatus 23 attached to the presentation site associated with each tactile signal. Note that, in Fig. 5, the tactile reproduction apparatus 22 is attached to the user 51 and is connected to a sensor 54 that measures the state (for example, a use state of tactile presentation apparatus 23) of the user 51. The sensor 54 may be any sensor that can measure the state of the user 51, such as a body temperature sensor, a blood flow sensor, a blood pressure sensor, a pulse sensor, or an electroencephalogram sensor, for example. Furthermore, a sensor other than the above-described sensors (for example, an imaging sensor such as a camera, an acceleration sensor, an angular velocity sensor, or the like) may be used.

At this time, the modulation unit 43 determines a modulation frequency on the basis of the tactile site information encoded by the encoding unit 32, information regarding a non-modulated signal to be described later, a user input from the outside, an input from the sensor 54, or the like, and performs modulation processing on the tactile signal. This modulation processing is processing of modulating a signal of a certain frequency while maintaining physical or perceptual intensity information in a signal before modulation. For example, amplitude modulation is used for the modulation processing.

The modulated signal is presented as a tactile stimulus to the user 51 through the tactile presentation apparatus 23.

<Configuration of Modulation Unit>

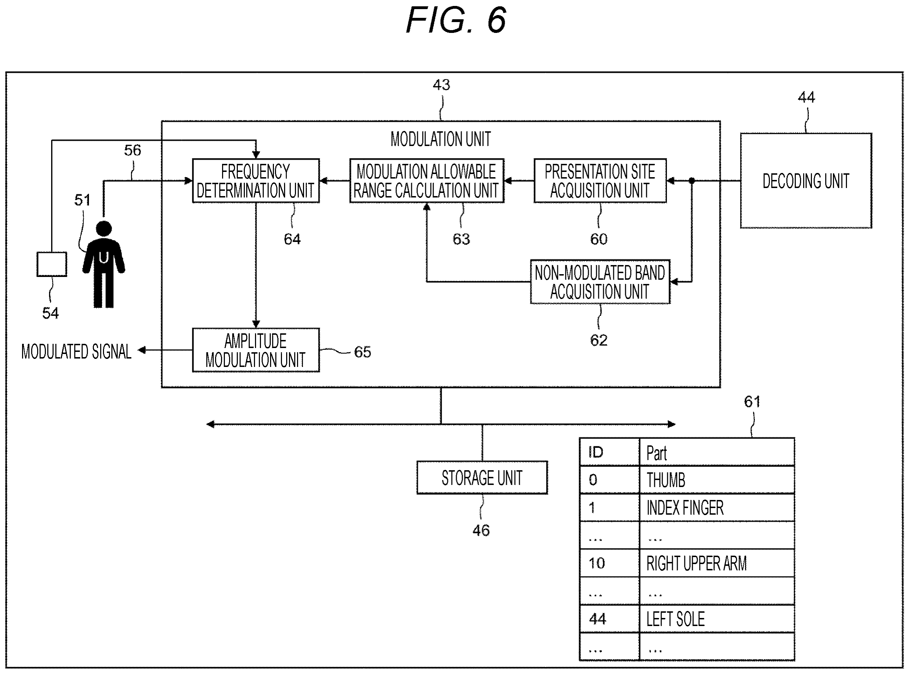

Fig. 6 is a block diagram illustrating a configuration example of the modulation unit 43 in Fig. 4.

The modulation unit 43 includes a presentation site acquisition unit 60, a presentation site table 61, a non-modulated band acquisition unit 62, a modulation allowable range calculation unit 63, a frequency determination unit 64, and an amplitude modulation unit 65.

The decoded signal obtained by the decoding unit 44 is supplied to the presentation site acquisition unit 60 and the non-modulated band acquisition unit 62. The decoded signal obtained by the decoding unit 44 includes tactile encoded data Dc.

The presentation site acquisition unit 60 acquires the presentation site information using the ID (referred to as a site ID) indicating the presentation site included in the decoded signal (that is, the tactile encoded data Dc) supplied from the decoding unit 44 and the presentation site table 61 stored in the storage unit 46. The presentation site acquisition unit 60 outputs the acquired presentation site information to the modulation allowable range calculation unit 63.

The presentation site table 61 is a table including, for example, information indicating that ID = 0 corresponds to the thumb, ID = 1 corresponds to the index finger, ..., ID = 10 corresponds to the right upper arm, ..., and ID = 44 corresponds to the left sole, and so on. Here, which presentation site each ID corresponds to may be determined in advance by the creator 50, or may be determined in advance by the user 51.

Note that this site ID may be given at the time of creating the tactile signal. Note that, instead of acquiring the presentation site information from the site ID and the presentation site table 61 as described above, the tactile reproduction apparatus 22 may receive the apparatus information of the tactile presentation apparatus 23, and acquire the attachment site information indicating the site to which the presentation apparatus 23 is to be attached, that is, the presentation site information, from the received apparatus information. Furthermore, each ID given at the time of creating the tactile signal may be appropriately added or deleted by the user 51.

The non-modulated band acquisition unit 62 acquires a band (hereinafter, the non-modulated band) of a non-modulated signal (component) that is not modulated by the amplitude modulation unit 65. The decoded signal (that is, the tactile encoded data Dc) supplied from the decoding unit 44 also includes data of a non-modulated signal. Therefore, the non-modulated band acquisition unit 62 performs known frequency analysis on the data of the non-modulated signal and acquires non-modulated band information indicating the value of the frequency range (bandwidth) of the non-modulated band. The non-modulated band acquisition unit 62 outputs the acquired non-modulated band information to the modulation allowable range calculation unit 63.

The modulation allowable range calculation unit 63 calculates the modulation allowable range on the basis of the presentation site information supplied from the presentation site acquisition unit 60 and the non-modulated band information supplied from the non-modulated band acquisition unit 62.

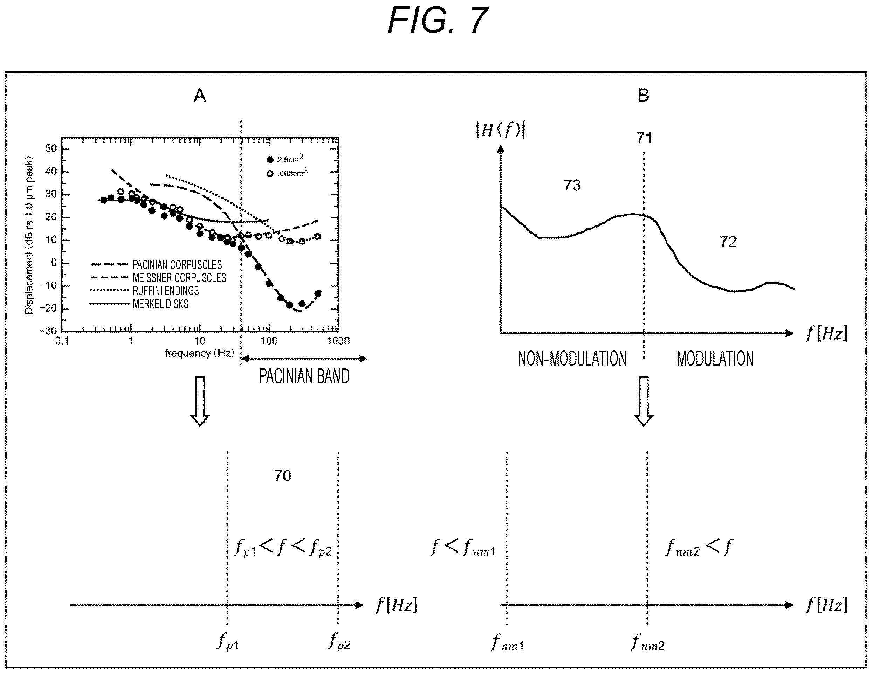

In a case where the tactile signal is subjected to amplitude modulation and presented at a predetermined site of the user, the modulation allowable range calculation unit 63 calculates a modulation frequency range (hereinafter, referred to as a modulation allowable range) in which perceptual degradation does not occur before and after the amplitude modulation. That is, if the modulation frequency at which the amplitude modulation is applied to the tactile signal is within the modulation allowable range obtained by the modulation allowable range calculation unit 63, the user's perception obtained by the amplitude modulation is less likely to change. A method of calculating the modulation allowable range will be described later with reference to Fig. 7.

The modulation allowable range calculation unit 63 outputs information indicating the calculated modulation allowable range to the frequency determination unit 64.

The frequency determination unit 64 determines a modulation frequency. First, the frequency determination unit 64 acquires an original modulation frequency (hereinafter, the desired modulation frequency) f0. The desired modulation frequency f0 is set to enjoy benefits of amplitude modulation by a known method such as reduction of vibration noise, a resonance frequency of the tactile presentation apparatus 23, and tactile sensitivity of a human, and is stored in the storage unit 46 in advance.

Next, the frequency determination unit 64 calculates the modulation frequency f from the modulation allowable range indicated by the modulation allowable range information supplied from the modulation allowable range calculation unit 63 and the desired modulation frequency f0. The frequency determination unit 64 outputs the calculated modulation frequency f to the amplitude modulation unit 65.

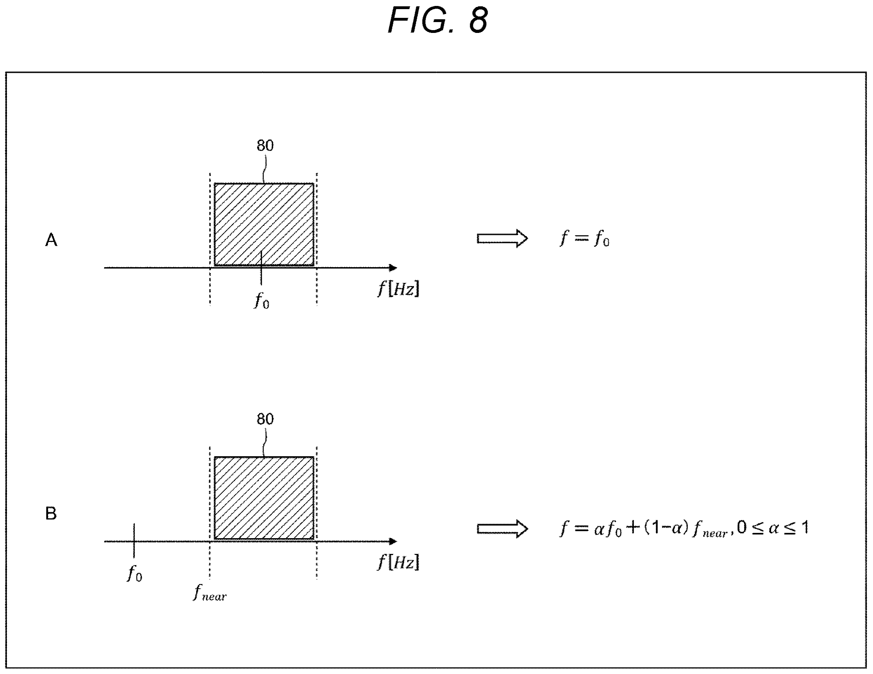

Note that the parameter $\alpha$ indicating the degree of avoidance of perceptual degradation used in calculating the modulation frequency f may be stored in advance in the storage unit 46, or may be set according to the user's preference by the input 56 of the user 51. Furthermore, as described above with reference to Fig. 5, the user 51 is attached with the sensor 54 that is connected to the tactile reproduction apparatus 22 and measures the state of the user. The parameter $\alpha$ may be determined by an input value of the sensor 54. A method of calculating the modulation frequency f and the parameter $\alpha$ will be described later with reference to Fig. 8.

The amplitude modulation unit 65 modulates the decoded tactile signal on the basis of the modulation frequency f determined by the frequency determination unit 64, and outputs the modulated tactile signal.

<Calculation Method of Modulation Allowable Range>

Fig. 7 is a diagram illustrating a method of calculating a modulation allowable range.

The modulation allowable range is calculated from two viewpoints.

A first viewpoint is a tactile perception characteristic of the tactile receptor illustrated in A of Fig. 7. Amplitude modulation is a process of changing the frequency of a signal. Therefore, both the frequencies stimulated before and after the amplitude modulation are within the frequency range (hereinafter, the Pacinian band) 70 in which Pacinian corpuscles insensitive to the frequency change predominantly respond.

A second viewpoint is interference with the non-modulated band illustrated in B of Fig. 7. As described above, since the modulation needs to be performed only in the Pacinian band 70, the modulated band 72 and the non-modulated band 73 occur in the frequency spectrum 71 of the original signal. Therefore, the modulation frequency is set outside the non-modulated band 73 so that the non-modulated signal and the modulated signal in the non-modulated band 73 do not interfere with each other.

Note that, for example, modulating the modulated band of 100 to 600 Hz to 300 Hz means changing 600 Hz to 300 Hz and also changing 100 Hz to 30 Hz. Here, in a case where the Pacinian band is 150 Hz or more, modulation is performed from the outside of the Pacinian band to the inside of the Pacinian band at 100 to 150 Hz. That is, in order to satisfy the condition for suppressing deterioration that "modulation is performed within the Pacinian band", a band in which modulation cannot be performed (in this case, less than 150 Hz) occurs, and this band has to be at least a non-modulated band.

However, as will be described later, depending on the degree of acceptance of deterioration, the entire band may be modulated, and the modulation frequency may be determined (in this case, since the condition of the non-modulated band is 0 Hz $\leq$ f, modulation is substantially performed considering only the Pacinian band) in order to reduce the deterioration as much as possible.

Note that the reason why the outside of the Pacinian band $\neq$ non-modulated band is that, in the above-described example, a case is assumed in which the non-modulated band is set up to 300 Hz. Pacinian corpuscles are merely "insensitive" to frequency change. Therefore, in the case of an ideal vibration device having excellent frequency characteristics and less noise, the perceptual quality is slightly higher when the modulated band is as small as possible. Therefore, it is also assumed that the non-modulated band overlaps with the Pacinian band.

The modulation allowable range calculation unit 63 calculates a frequency range that satisfies the above two conditions.

A more specific calculation method will be described.

First, human tactile reception characteristics are estimated, and the Pacinian band 70 is acquired. The Pacinian band 70 can be acquired by the modulation allowable range calculation unit 63 reading the frequency range for each site stored in advance in the storage unit 46 according to the presentation site information acquired by the presentation site acquisition unit 60. Note that, in a case where it is considered that the difference of the Pacinian band 70 depending on the human site is small, only one frequency range may be recorded in the storage unit 46 and read regardless of the presentation site.

Here, assuming that the Pacinian band 70 is [fp1, fp2], a condition expressed by the following expression (1) is imposed as a first condition so that the modulation frequency f falls within the Pacinian band [fp1, fp2].

$$\mathtt{fp1} \leq \mathtt{f} \leq \mathtt{fp2} \ \ldots(1)$$

In addition, when the non-modulated band 73 is set to [fnm1, fnm2], a condition expressed by the following expression (2) is imposed as a second condition so that the modulation frequency f is not included in the non-modulated band [fnm1, fnm2] acquired by the non-modulated band acquisition unit 62.

$$\mathtt{f} < \mathtt{fnm1}, \ \mathtt{fnm2} < \mathtt{f} \ \ldots(2)$$

The modulation allowable range calculation unit 63 calculates a range of the modulation frequency f that simultaneously satisfies the two conditions as the modulation allowable range.

<Method of Calculating Modulation Frequency>

Fig. 8 is a diagram illustrating a method of calculating the modulation frequency f.

As illustrated in A of Fig. 8, when the desired modulation frequency f0 satisfies the modulation allowable range 80, the frequency determination unit 64 outputs the desired modulation frequency f0 as it is as the modulation frequency f.

On the other hand, as illustrated in B of Fig. 8, in a case where the desired modulation frequency f0 does not satisfy the modulation allowable range 80, the modulation allowable range calculation unit 63 determines a new modulation frequency f based on the modulation allowable range 80.

In a case where a frequency that satisfies the modulation allowable range 80 and is closest to the desired modulation frequency f0 is f_near, the modulation frequency f is determined by the following expression (3).

$$\mathtt{f} = \alpha\mathtt{f0} + (1 - \alpha) \ \mathtt{f\_near}, \ 0 \leq \alpha \leq 1 \ \ldots(3)$$

Here, $\alpha$ is a parameter indicating the degree of avoidance of perceptual degradation for balancing the avoidance of perceptual degradation and the benefit of amplitude modulation, and in a case where the parameter $\alpha$ = 1, the modulation allowable range is ignored and the benefit of amplitude modulation is prioritized. In the case of the parameter $\alpha$ = 0, avoidance of perceptual degradation is prioritized.

As described above, the parameter $\alpha$ stored in advance in the storage unit 46 according to the use case may be used, or may be set according to the user's preference by the input 56 of the user 51. In addition, the parameter $\alpha$ may be determined by an input value of the above-described sensor 54 connected to the tactile reproduction apparatus 22.

For example, the sensor 54 may be an acceleration sensor that measures the adhesion degree between the tactile presentation apparatus 23 and the user 51, and the frequency determination unit 64 may set the parameter $\alpha$ according to the adhesion degree information measured by the sensor 54. This will be described later in detail.

As a result, in a case where the modulation frequency at which the benefit of the amplitude modulation is obtained does not cause perceptual degradation, the user can fully enjoy the benefit of the amplitude modulation as it is. In addition, in a case where the modulation frequency at which the benefit of the amplitude modulation can be obtained may cause perceptual degradation, it is possible to perform modulation while balancing the benefit of the perceptual degradation and the amplitude modulation.

As described above, by setting the parameter $\alpha$ indicating the degree of avoidance of the perceptual degradation and determining the modulation frequency f, the amplitude modulation can be performed while balancing the benefit of the amplitude modulation and the avoidance of the perceptual degradation according to the presentation site, the frequency band of the non-modulated signal, and the state of the user 51 (the use state of the tactile presentation apparatus 23), and the user can perceive the tactile sense originally desired to be presented by the creator while receiving the benefit of the amplitude modulation.

<3. First Processing Example>

<Reproduction Processing of Tactile Signal Created by Creator>

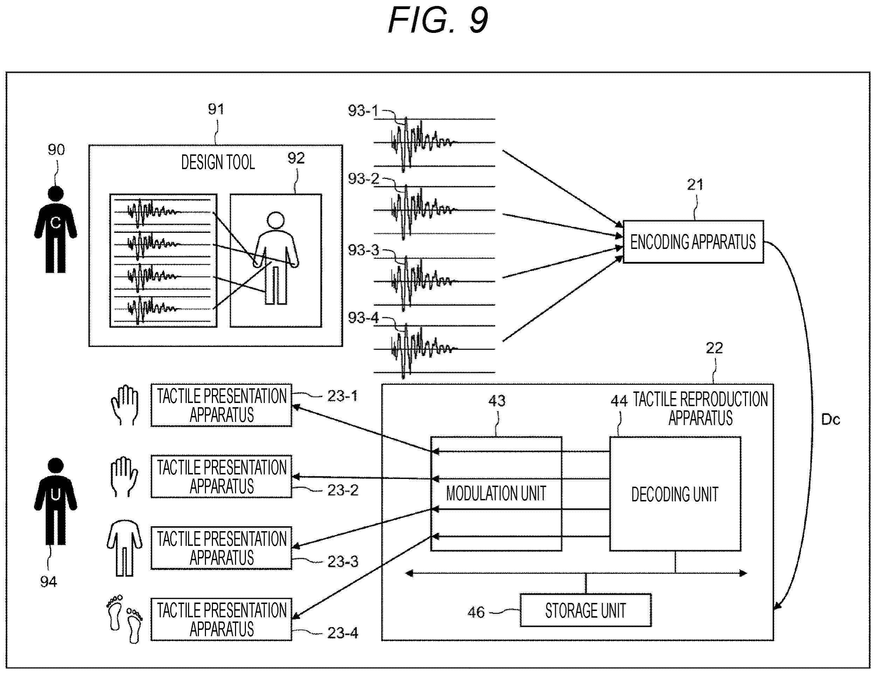

Fig. 9 is a diagram illustrating processing in which the user reproduces a tactile signal created by a creator with an unknown tactile presentation apparatus as a first processing example.

A creator 90 creates a tactile signal to be presented by the design tool 91. A human figure 92 is displayed on the design tool 91. When the creator 90 selects a site on the human figure 92, the design tool 91 associates the tactile signal with the selected presentation site.

In response to the selection of the creator 90, the design tool 91 creates four tactile signals 93-1 to 93-4. The four created tactile signals 93-1 to 93-4 are associated with the left hand, the right hand, the back, and the soles of both feet, for example, by the design tool 91.

Note that, as a modification, the creator 90 may manually input the site ID corresponding to the desired part to the UI of the text box provided in the design tool 91, thereby associating the site ID corresponding to the desired part. Furthermore, in a case where the creator 90 who uses the design tool 91 is a beginner or is unaccustomed to content creation using a tactile signal, or the like, it is considered preferable for the creator 90 to refer to content data created by a famous creator. Therefore, for example, content data created by a famous creator may be stored as reference data in the design tool 91 or on a server so that the creator 90 can appropriately select.

The encoding apparatus 21 encodes the tactile signals 93-1 to 93-4 created by the design tool 91, and generates tactile encoded data Dc. The encoding apparatus 21 provides at least site ID and non-modulated signal data to each of the tactile signals 93-1 to 93-4 for each site. The signal of the modulated band is encoded only the intensity data or the signal itself.

The generated tactile encoded data Dc is acquired by the tactile reproduction apparatus 22 of the user 94 and decoded by the decoding unit 44. The decoding unit 44 outputs each decoded signal to the modulation unit 43 connected to the tactile presentation apparatus 23.

The modulation unit 43 specifies a tactile presentation site from the decoded site ID. In Fig. 9, since IDs corresponding to the left hand, the right hand, the back, and the soles of both feet are respectively given by the design tool 91, the modulation unit 43 acquires any one of these pieces of tactile site information as a presentation site.

The modulation unit 43 reads, on the basis of the tactile site information, the Pacinian band information for each site stored in advance in the storage unit 46 of the tactile reproduction apparatus 22, and determines the value as the Pacinian band. In addition, in parallel, the modulation unit 43 estimates a non-modulated band from the data of the decoded non-modulated signal.

The modulation unit 43 calculates a modulation allowable range on the basis of the obtained Pacinian band information and non-modulated band information. As an example, in a case where the Pacinian band is 150 Hz or more for the left hand and the right hand, the sole of the foot, 200 Hz or more for the back, and all the non-modulated bands are 0 to 200 Hz, 200 Hz $\leq$ f is obtained as the modulation allowable range as the range of f that simultaneously satisfies the condition 150 Hz $\leq$ f according to the Pacinian band and the condition 200 Hz $\leq$ f according to the non-modulated band for the left hand, the right hand, and the sole. Similarly, the range of 200 Hz or more is obtained as the modulation allowable range in which the back is included in the Pacinian band and is not included in the non-modulated band.

The modulation unit 43 determines a modulation frequency on the basis of the modulation allowable range and the desired modulation frequency. For example, it is assumed that tactile presentation apparatuses 23-1 and 23-2 having a resonance frequency of 300 Hz are used for the left hand and the right hand, a tactile presentation apparatus 23-3 having a resonance frequency of 200 Hz is used for the sole, and a tactile presentation apparatus 23-4 having a resonance frequency of 50 Hz is used for the back. Then, it is assumed that the desired modulation frequency is set to the same value as the resonance frequency in order to improve the driving efficiency.

In the example of Fig. 9, the parameter $\alpha$ is set to 0 in order to avoid perceptual degradation. In this case, the desired modulation frequency 300 Hz of the left hand and the right hand satisfies the modulation allowable range of 200 Hz or more. Therefore, the modulation frequency is set to 300 Hz as the desired modulation frequency. Since the desired modulation frequency of 200 Hz of the sole also satisfies the modulation allowable range of 200 Hz or more, the modulation frequency is set to 200 Hz.

On the other hand, the desired modulation frequency 50 Hz of the back does not satisfy 200 Hz or more of the modulation allowable range. Therefore, the modulation unit 43 adopts f = 0 × f0 + 1 × f_near = 200 Hz as the modulation frequency on the basis of the frequency f_near = 200 Hz satisfying the modulation allowable range closest to the desired modulation frequency.

The modulation unit 43 modulates these signals using the respective modulation frequencies, adds the signals to the non-modulated signals, and then outputs the signals from the tactile presentation apparatuses 23-1 to 23-4, respectively, to present tactile stimuli to the user 94.

As a result, the creator is in a situation where what kind of tactile presentation apparatus the user uses is unknown, and thus, it is not possible to know whether or not modulation in consideration of perceptual degradation is necessary at the production stage. However, it is possible to determine the modulation frequency based on the tactile perception characteristics and the non-modulated signal only when it is necessary to avoid perceptual degradation in the tactile reproduction apparatus 22, and it is possible to receive the maximum benefit of the amplitude modulation (for example, the parameter $\alpha$ is set to 1, and the desired modulation frequency f0 is determined as the modulation frequency) when it is not necessary to avoid perceptual degradation.

<Modification of Encoding>

In a case where at least a partial band of the tactile signal is determined to be modulated in the tactile reproduction apparatus 22, only the intensity data may be encoded as the signal of the modulated band. In this case, the amount of information can be reduced as compared with encoding the waveform data itself.

The "intensity data" herein may be amplitude of a waveform or perceptual intensity information converted into a human perception amount. As the perceptual intensity information, a Sensation Level indicating how many times the amplitude of the vibration detection threshold value, which is a threshold value for detecting human vibration, or the like is considered.

In a case where the implementation of modulation in the tactile reproduction apparatus 22 is unknown, the waveform data is encoded as it is. Thus, it is possible to select whether or not to modulate in the tactile reproduction apparatus 22.

In addition, the amount of information may be reduced by encoding the data of the non-modulated signal and the data of the signal of the modulated band in a case where the waveform data is encoded as it is by a known encoding technique.

Furthermore, the boundary frequency between the modulated band and the non-modulated band set at the time of signal creation may be included in the tactile encoded data Dc. In this case, the processing of acquiring the non-modulated band in the modulation unit 43 is changed from signal analysis such as spectrum analysis to simple data reading. As a result, the information amount of the tactile encoded data Dc increases, but instead, the load of the non-modulated band acquisition processing in the tactile reproduction apparatus 22 can be reduced.

<Transmission Data Format>

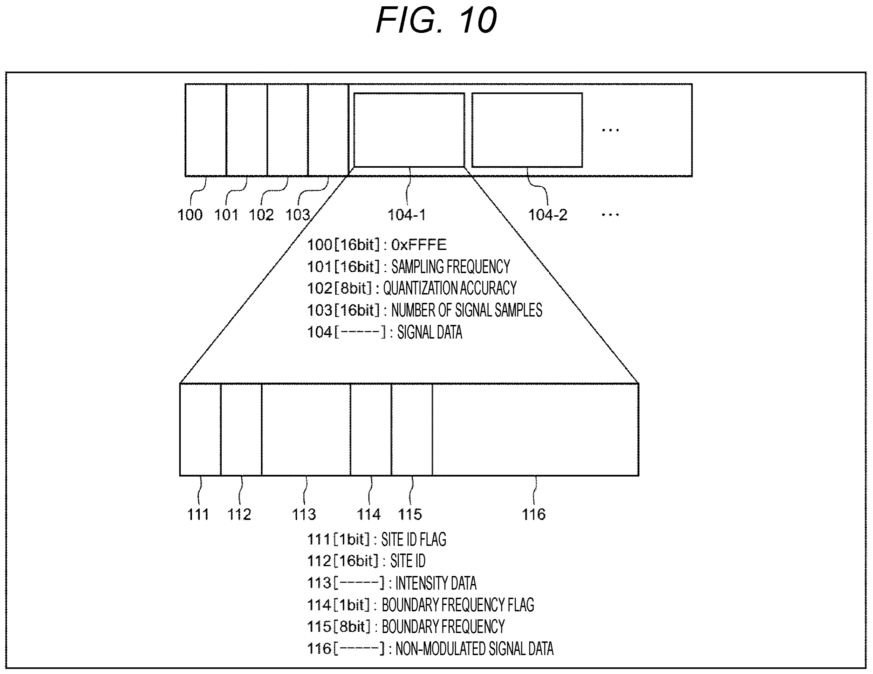

Fig. 10 is a diagram illustrating an example of a transmission data format of data transmitted from the encoding apparatus 21 to the tactile reproduction apparatus 22. Fig. 10 is merely an example of the transmission data format, and the configuration of the transmission format may be a format configuration (for example, the contents, order, and the like of the data) different from that of Fig. 10.

The data includes regions 100 to 103, a data region 104-1, a data region 104-2, and so on. Note that in a case where it is not necessary to distinguish between data regions 104-1, 104-2, and so on, they are collectively referred to as data region 104.

An identifier is stored in the region 100. The sampling frequency of the signal is stored in the region 101. The quantization accuracy is stored in the region 102. The number of samples of the signal data of each multiplexed signal is stored in the region 103. The signal data of each multiplexed signal is stored in the data region 104.

The data region 104 includes regions 111 to 116.

The region 111 stores a site ID flag indicating the presence or absence of a site ID associated with the presentation site of the signal. In a case where the site ID flag is 1, the site ID is stored in the region 112. In a case where the site ID flag is 0, the data of the region 112 is omitted.

The region 113 stores intensity data (intensity information). The intensity data is modulation intensity information at the time of modulation. Note that, as described above, in a case where the waveform data is encoded as it is, the waveform data is stored in this region 113, for example.

The region 114 stores a boundary frequency flag indicating the presence or absence of a boundary frequency between the modulated band and the non-modulated band.

In a case where the boundary frequency flag is 1, the boundary frequency is stored in the region 115. In a case where the boundary frequency flag is 0, the data of the region 115 is omitted.

Data of a non-modulated signal which is a component not to be modulated is stored in the region 116.

Here, it is desirable that the entire contents of the data format illustrated in Fig. 10 be transmitted, but there may be a case where a communication band is insufficient or a calculation resource or a remaining battery amount of the tactile reproduction apparatus is insufficient. Therefore, in the above-described case, only a necessary part of the contents of the data format illustrated in Fig. 10 may be transmitted (for example, only the data region 104 is transmitted) instead of transmitting the entire contents of the data format. In addition, when packet loss occurs or the like, a signal of a missing part may be retransmitted as appropriate.

<Determination Processing of Presentation Site in Tactile Movie>

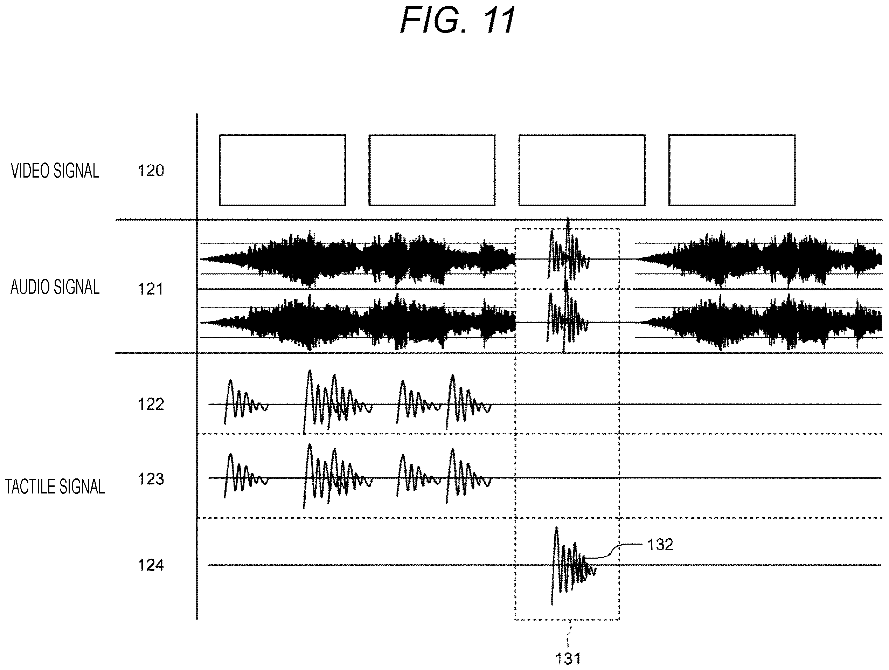

Fig. 11 is a diagram illustrating determination processing of a presentation site in a tactile movie as a modification of the first processing in Fig. 9.

Fig. 11 illustrates an example in which a creator gives a tactile signal to existing video content or creates video content newly including a tactile signal.

When the creator 90 creates a tactile signal with the design tool 91, the design tool 91 determines and gives an appropriate presentation site on the basis of the property of the tactile signal and sensor information (modal signal) acquired from another sensor without the creator 90 designating the presentation site of the tactile signal.

In the creation of the tactile content, it is assumed that the video signal 120, the audio signal 121, and the tactile signals 122 to 124 are handled in a temporally synchronized manner. Here, as a first method of determining a presentation site of the tactile signals 122 to 124, the design tool 91 determines the presentation site from the properties obtained by analyzing the tactile signals.

For example, it is assumed that tactile signals 122 and 123 are well synchronized with each other in terms of time and contain a large amount of low-frequency components by a known method such as calculation of a peak position of a cross-correlation function or spectrum analysis. Therefore, since the synchronized low-frequency component can be powerful by being presented to both feet, the left foot and the right foot are designated as presentation sites of the tactile signals 122 and 123, respectively.

In addition, as another example, the presentation site may be determined on the basis of the properties of the video signal 120 and the audio signal 121.

For example, on the basis of a known acoustic scene analysis method or a scene analysis result of the video signal 120, it is assumed that the sound included in the section 131 of the audio signal 121 is a gunshot, and it is found that the sound is well synchronized with the tactile signal waveform 132 in the same section 131.

In this case, the design tool 91 first determines that the tactile signal waveform 132 is associated with a gunshot. Then, the design tool 91 designates the presentation site of the tactile signal 124 to the ear, for example, in order to produce a tense feeling in which the bullet scratches the ear.

For example, in this processing, a table indicating a correspondence between a property of a signal and a presentation site may be used. For example, this table may be stored in advance in the storage unit 34 of the encoding apparatus 21, or may be set in advance by the creator 90 through the design tool 91. Furthermore, this table may be acquired from the Internet, or may be obtained by the design tool learning the presentation site setting of the creator. Furthermore, the creator may appropriately select these tables.

In this way, by determining the presentation site of the tactile signal, it is possible to reduce the cost of creating the tactile content that requires specifying the site for a very large number of signals. Then, the modulation processing of the present technology can be used on the basis of the designated site information in this manner.

<4. Second Processing Example>

<Dynamic Setting Processing of Degree of Avoidance of Perceptual Degradation in Virtual Reality (VR)>

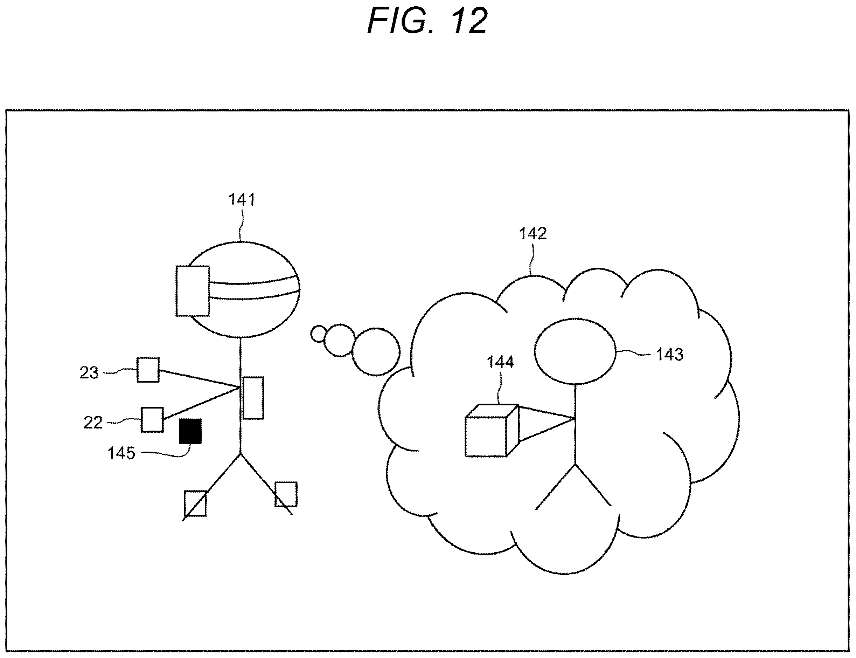

Fig. 12 is a diagram illustrating processing in which the user performs tactile presentation in VR, augmented reality (AR), or the like as a second processing example.

For example, a VR game is considered as an application to which the present technology is applied.

A user 141 who is a player of a game attaches a tactile reproduction apparatus and a plurality of tactile presentation apparatuses 23 connected to the tactile reproduction apparatus 22 to a body. When the virtual user 143 in the VR space 142 touches the virtual substance 144 in this state, the tactile encoded data Dc is transmitted to the tactile reproduction apparatus 22 according to the property and the contact method set for the virtual substance 144, and the tactile stimulus is presented to the user 141 via the tactile presentation apparatus 23. In this way, the user 141 can experience as if the user touches the virtual substance 144 in the VR space 142.

In the second processing example, for example, the hand and the sole play an important role in order to confirm the touch feeling of the object and the tread feeling of the ground. Therefore, perceptual degradation of these sites should be avoided as much as possible.

On the other hand, although the back may not require precise stimulation discrimination, the presentation area is large and the sensitivity is low, so that the power consumption may be large to provide sufficient stimulation. Therefore, it is highly valuable to improve the driving efficiency of the tactile presentation apparatus 23 by maximally utilizing the amplitude modulation in a site having a large presentation area such as the back and low sensitivity.

Therefore, for example, if the presentation site is the hand or the sole, the tactile reproduction apparatus 22 sets the parameter $\alpha = 0$ so that perceptual degradation can be avoided, and determines the modulation frequency focusing on the modulation allowable range. On the other hand, the tactile reproduction apparatus 22 sets the parameter $\alpha = 0.5$ in other sites, for example, a site such as an abdomen or an upper arm, thereby achieving both avoidance of perceptual degradation and improvement of perceptual sensitivity to some extent.

For example, the tactile reproduction apparatus 22 prioritizes improvement of driving efficiency while ignoring the parameter $\alpha = 1$, that is, the modulation allowable range, particularly in a site with low tactile sensitivity such as the back.

As described above, the parameter $\alpha$ indicating the degree of avoidance of perceptual degradation is adjusted according to the presentation site of the tactile stimulus. As a result, it is possible to perform modulation after adjusting the parameters so as to avoid perceptual degradation in a site with sharp sensation, enjoy the benefit of efficiency improvement by modulation in a site with low sensitivity, and to achieve both the benefits to some extent in a moderately insensitive site.

In addition, the balance between the perceptual degradation avoidance and the modulation benefit enjoyment may be determined by connecting another sensor 145 provided in the system including the user 141 to the tactile reproduction apparatus 22 and using the information.

For example, the sensor 145 is an acceleration sensor that measures the adhesion degree between the user 141 and each tactile presentation apparatus 23.

In a case where the adhesion degree is low, tactile presentation to the user 141 becomes unstable, and there is a possibility that perception is interrupted by a stimulus with low energy. The interruption of the tactile presentation has a larger loss to the user experience than the perceptual degradation of the signal itself, and thus, it is preferable to avoid the interruption of the tactile presentation.

In this case, the tactile reproduction apparatus 22 may ignore the modulation allowable range so that the user 141 can perceive a tactile sense with high sensitivity, and may prioritize modulation to a resonance frequency of the tactile presentation apparatus 23 or a higher frequency of human tactile sensitivity. That is, the parameter $\alpha$ may be set to a large value.

On the other hand, in a case where the adhesion degree is high, there is no concern, and it is considered that the user 141 also perceives a carefully presented tactile sensation. In this case, since the user 141 easily notices perceptual degradation, the tactile reproduction apparatus 22 sets the parameter $\alpha$ to a small value to prevent perceptual degradation.

Note that, as another example, the sensor 145 may be a motion capture system that measures motion state information indicating a motion state such as an arm swing speed of the user 141.

In general, it is said that a human is more insensitive to a fine difference in tactile sensation when moving than when stationary. Therefore, in a case where the user 141 is performing a large motion, the tactile reproduction apparatus 22 may set the parameter $\alpha$ to a large value, and may give priority to driving efficiency and perceptual quality improvement. On the other hand, in a case where the motion of the user 141 is small, the tactile reproduction apparatus 22 may set the parameter $\alpha$ to a small value and give priority to avoidance of perceptual degradation.

As a result, even in a use case such as VR or AR in which the wearing state of the tactile presentation apparatus 23 is constantly changed by moving around, and the tactile presentation apparatus 23 itself may be separated from the user 141, or the motion state of the user may be changed, and the perception sensitivity may also be changed, modulation is performed by reflecting the adhesion degree and the motion state, and it is possible to appropriately prevent disconnection of stimulation and perceptual degradation according to the state at that time.

<Decoding and Modulation Processing>

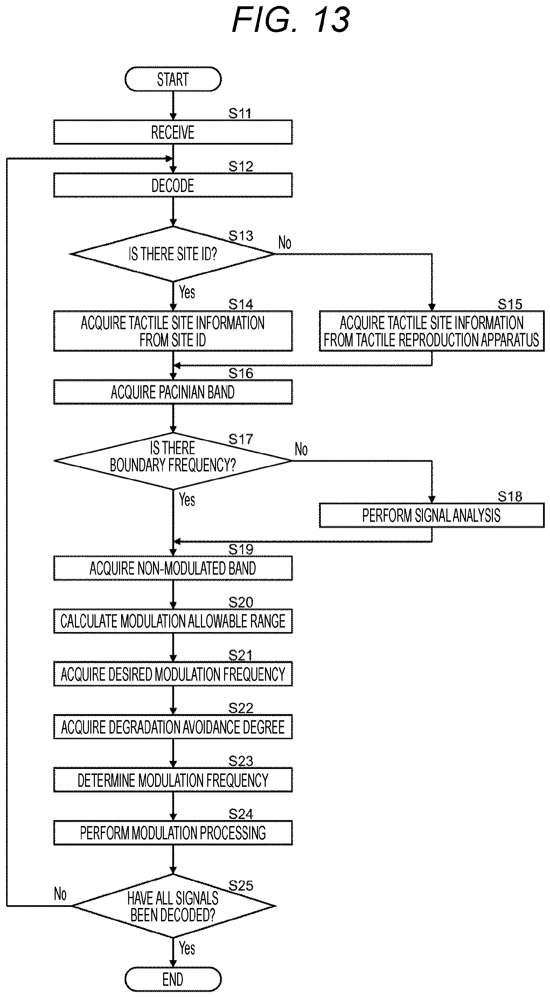

Fig. 13 is a flowchart for explaining decoding and modulation processing of the tactile reproduction apparatus 22.

Fig. 13 illustrates processing in which the tactile encoded data Dc is decoded by the decoding unit 44 and a modulated signal is output by the modulation unit 43.

In step S11, the decoding unit 44 receives the tactile encoded data Dc.

In step S12, the decoding unit 44 decodes the received signal to acquire a decoded signal (that is, the tactile encoded data Dc).

In step S13, the presentation site acquisition unit 60 determines whether or not a site ID is included in the decoded signal. In a case where it is determined in step S13 that the site ID is included in the decoded signal, the processing proceeds to step S14.

In step S14, the presentation site acquisition unit 60 acquires the presentation site information on the basis of the site ID and the presentation site table 61. The presentation site acquisition unit 60 outputs the acquired presentation site information to the modulation allowable range calculation unit 63.

In a case where it is determined in step S13 that the site ID is not included in the decoded signal, the processing proceeds to step S15.

In step S15, the presentation site acquisition unit 60 receives the apparatus information of the tactile presentation apparatus 23, and acquires the attachment site information, that is, the presentation site information, from the received apparatus information. The presentation site acquisition unit 60 outputs the acquired presentation site information to the modulation allowable range calculation unit 63.

After steps S14 and S15, the processing proceeds to step S16.

In step S16, the modulation allowable range calculation unit 63 acquires the Pacinian band on the basis of the presentation site information.

In step S17, the non-modulated band acquisition unit 62 determines whether or not the boundary frequency is included in the decoded signal. In a case where it is determined in step S17 that the boundary frequency is not included in the decoded signal, the processing proceeds to step S18.

In step S18, the non-modulated band acquisition unit 62 performs signal analysis.

In a case where it is determined in step S17 that the boundary frequency is included in the decoded signal, the processing skips step S18 and proceeds to step S19.

In step S19, the non-modulated band acquisition unit 62 acquires the non-modulated band (width) on the basis of the boundary frequency or the result of the signal analysis. The non-modulated band acquisition unit 62 outputs the acquired non-modulated band information to the modulation allowable range calculation unit 63.

In step S20, the modulation allowable range calculation unit 63 calculates the modulation allowable range on the basis of the Pacinian band acquired in step S17 and the non-modulated band information supplied from the non-modulated band acquisition unit 62. The modulation allowable range calculation unit 63 outputs modulation allowable range information indicating the calculated modulation allowable range to the frequency determination unit 64.

In step S21, the frequency determination unit 64 acquires the desired modulation frequency f stored in advance in the storage unit 46.

In step S22, the frequency determination unit 64 acquires the parameter $\alpha$ indicating the degree of avoidance of perceptual degradation from the storage unit 46, an external input, or the like. Note that, as described above, the parameter $\alpha$ may be calculated on the basis of sensor information acquired from another sensor 54 connected to the tactile reproduction apparatus 22.

In step S23, the frequency determination unit 64 determines the modulation frequency f on the basis of the modulation allowable range information, the desired modulation frequency f0, and the degree of avoidance of perceptual degradation. The frequency determination unit 64 outputs the calculated modulation frequency f to the amplitude modulation unit 65.

In step S24, the amplitude modulation unit 65 performs amplitude modulation on the decoded tactile signal on the basis of the modulation frequency f determined by the frequency determination unit 64, and outputs the amplitude modulation as a modulated signal.

In step S25, the decoding unit 44 determines whether or not all the signals have been decoded. In a case where it is determined in step S25 that all the signals have not been decoded, the processing returns to step S11, and the subsequent processing is repeated.

In a case where it is determined in step S25 that all the signals have been decoded, the decoding and modulation processing in Fig. 13 ends.

Note that the site acquisition in steps S13 to S15, the non-modulated band acquisition in steps S17 to S19, the acquisition of the desired modulation frequency f0 in step S21, and the acquisition of the degree of avoidance of perceptual degradation in step S22 in Fig. 13 are processes performed in parallel, and the order may be changed.

<5. Others>

<Effects of Present Technology>

As described above, in the present technology, a modulation frequency of a content signal is determined on the basis of at least any one of a tactile perception characteristic for each presentation site, information regarding a non-modulated signal that is not modulated, and a user state, and modulation with the modulation frequency is executed on the content signal.

As a result, it is possible to suppress perceptual degradation due to modulation while receiving benefits such as improvement in driving efficiency and perception sensitivity due to modulation and noise reduction.

Note that, in the above description, the tactile signal of the content has been described as an example, but the present technology can be applied not only to the tactile signal of the content but also to an audio signal or a video signal of the content.

<Configuration Example of Computer>

The above-described series of processing can be executed by hardware or software. In a case where the series of processing is executed by software, a program constituting the software is installed from a program recording medium to a computer incorporated in dedicated hardware, a general-purpose personal computer, or the like.

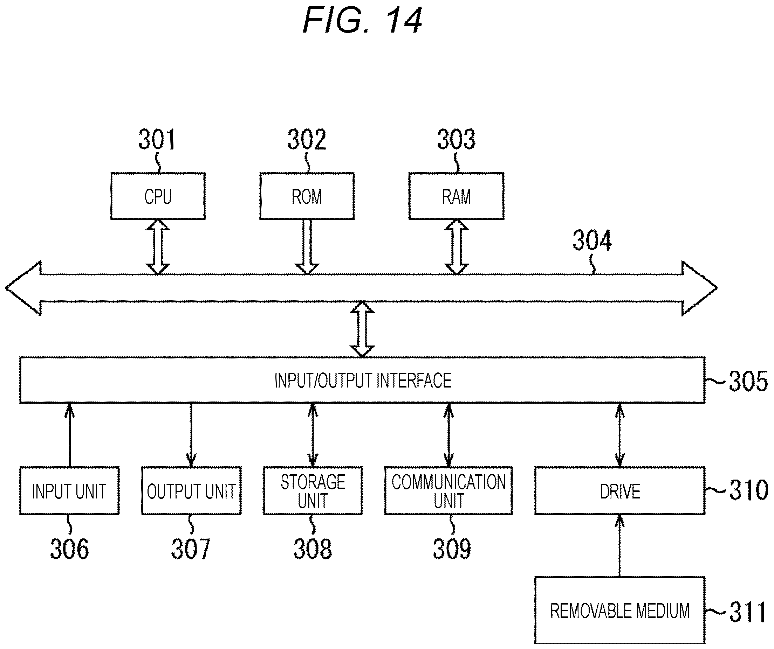

Fig. 14 is a block diagram illustrating a configuration example of hardware of a computer that executes the above-described series of processing by a program.

A CPU 301, a ROM 302, and a RAM 303 are connected to one another by a bus 304.

An input/output interface 305 is further connected to the bus 304. An input unit 306 including a keyboard, a mouse, and the like, and an output unit 307 including a display, a speaker, and the like are connected to the input/output interface 305. Furthermore, a storage unit 308 including a hard disk, a nonvolatile memory, and the like, a communication unit 309 including a network interface and the like, and a drive 310 that drives a removable medium 311 are connected to the input/output interface 305.

In the computer configured as described above, for example, the CPU 301 loads a program stored in the storage unit 308 into the RAM 303 via the input/output interface 305 and the bus 304 and executes the program, whereby the above-described series of processing is performed.

The program executed by the CPU 301 is provided, for example, by being recorded in the removable medium 311 or via a wired or wireless transmission medium such as a local area network, the Internet, or digital broadcasting, and is installed in the storage unit 308.

Note that the program executed by the computer may be a program in which processing is performed in time series in the order described in the present specification, or may be a program in which processing is performed in parallel or at necessary timing such as when a call is made.

Note that, in the present specification, a system means a set of a plurality of components (apparatuses, modules (parts), or the like), and it does not matter whether or not all the components are in the same housing. Therefore, a plurality of apparatuses housed in separate housings and connected via a network and one apparatus in which a plurality of modules is housed in one housing are both systems.

Furthermore, the effects described in the present specification are merely examples and are not limited, and other effects may be provided.

The embodiments of the present technology are not limited to the above-described embodiments, and various modifications can be made without departing from the gist of the present technology.

For example, the present technology can have a configuration of cloud computing in which one function is shared and processed in cooperation by a plurality of apparatuses via a network.

Furthermore, each step described in the above-described flowchart can be executed by one apparatus or can be shared and executed by a plurality of apparatuses.

Furthermore, in a case where a plurality of processes is included in one step, the plurality of processes included in the one step can be executed by one apparatus or can be shared and executed by a plurality of apparatuses.

<Combination Example of Configuration>

The present technology can also have the following configurations.

(1) An information processing apparatus including:

a frequency determination unit that determines a modulation frequency of a content signal on the basis of at least any one of a tactile perception characteristic for each presentation site, information regarding a non-modulated signal that is not modulated, and a user state; and
a modulation unit that performs modulation on the content signal using the modulation frequency.

(2) The information processing apparatus according to (1), in which the frequency determination unit performs modulation with the modulation frequency determined by the frequency determination unit in a case where avoidance of perceptual degradation is necessary, and performs modulation with the modulation frequency using a preset desired frequency as the modulation frequency in a case where avoidance of perceptual degradation is not necessary.

(3) The information processing apparatus according to (1) or (2), in which

the content signal is at least any one of a tactile signal, an audio signal, and a video signal.

(4) The information processing apparatus according to any one of (1) to (3), in which

the user state is a use state of a device worn by a user.

(5) The information processing apparatus according to any one of (1) to (4), in which

the frequency determination unit determines the modulation frequency in accordance with a parameter indicating a degree of avoidance of perceptual degradation.

(6) The information processing apparatus according to (5), in which

the parameter is set according to sensor information acquired from a sensor attached to a user.

(7) The information processing apparatus according to (6), in which

the sensor information is at least one of motion state information or adhesion degree information.

(8) The information processing apparatus according to (5), in which the parameter is set by an instruction of a user or is set in advance for each of the presentation sites.

(9) The information processing apparatus according to any one of (1) to (8), in which

the frequency determination unit determines the modulation frequency on the basis of a frequency range in which a Pacinian corpuscle dominantly responds at the presentation site as the tactile perception characteristic for each presentation site.

(10) The information processing apparatus according to any one of (1) to (9), in which

the frequency determination unit determines the modulation frequency on the basis of a bandwidth of the non-modulated signal as the information regarding the non-modulated signal.

(11) The information processing apparatus according to any one of (1) to (10), further including

a site information acquisition unit that acquires presentation site information indicating the presentation site, in which

the frequency determination unit determines the modulation frequency on the basis of a tactile perception characteristic of the presentation site indicated by the presentation site information.

(12) The information processing apparatus according to any one of (1) to (11), further including

a non-modulated signal information acquisition unit that acquires information regarding the non-modulated signal.

(13) The information processing apparatus according to any one of (1) to (12), further including

a modulation allowable range calculation unit that calculates a modulation allowable range that is a range in which modulation is allowable on the basis of a presentation site information indicating the presentation site and the information regarding the non-modulated signal, in which

the frequency determination unit determines the modulation frequency on the basis of the modulation allowable range.

(14) The information processing apparatus according to (11), further including

a decoding unit that decodes an encoded signal of the content signal, the encoded signal including at least a presentation site identifier for identifying the presentation site, modulation intensity information, and the non-modulated signal, in which

the site information acquisition unit acquires the presentation site information by using the presentation site identifier decoded.

(15) The information processing apparatus according to (14), in which

the presentation site identifier is set by an instruction of a creator.

(16) The information processing apparatus according to (14), in which

the presentation site identifier is set on the basis of at least one of an analysis result of the content signal or other sensor information.

(17) The information processing apparatus according to (14), in which

the encoded signal includes information regarding the non-modulated signal.

(18) The information processing apparatus according to (11), in which

the site information acquisition unit acquires the presentation site information from a presentation apparatus that presents information corresponding to the content signal.

(19) An information processing method in which

an information processing apparatus is configured to
determine a modulation frequency of a content signal on the basis of at least any one of a tactile perception characteristic for each presentation site, information regarding a non-modulated signal that is not modulated, and a user state; and
perform modulation on the content signal using the modulation frequency.

(20) A program for causing a computer to function as:

a frequency determination unit that determines a modulation frequency of a content signal on the basis of at least any one of a tactile perception characteristic for each presentation site, information regarding a non-modulated signal that is not modulated, and a user state; and
a modulation unit that performs modulation on the content signal using the modulation frequency.

(21) An information processing apparatus including
an encoding unit that encodes a content signal and generates an encoded signal including at least information indicating a presentation site, modulation intensity information, and a non-modulated signal that is not modulated.

REFERENCE SIGNS LIST

1 Tactile presentation system
11 Production environment
12 Presentation environment
20, 20-1 to 20-m Tactile signal
21 Encoding apparatus
22 Tactile reproduction apparatus
23-1 to 23-n Tactile presentation apparatus
31, 31-1 to 31-m Tactile signal input unit
32 Encoding unit
33 Control unit
34 Storage unit
35 Communication unit
36 Bus
41-1 to 41-n Amplifier
42-1 to 42-n D/A converter
43 Modulation unit
44 Decoding unit
45 Control unit
46 Storage unit
47 Communication unit
48 Bus
50 Creator
51 User
52 Design tool
53 Tactile signal
54 Sensor
60 Presentation site acquisition unit
61 Presentation site table
62 Non-modulated band acquisition unit
63 Modulation allowable range calculation unit
64 Frequency determination unit
65 Amplitude modulation unit
70 Pacinian band
71 Frequency spectrum
72 Band
73 Non-modulated band
80 Modulation allowable range

90 Creator
91 Design tool
92 Human figure
93-1 to 93-4 Tactile signal
94 User
120 Video signal
121 Audio signal
122 to 124 Tactile signal
141 User
142 VR game
144 Virtual substance
145 Sensor

## Claims

1. An information processing apparatus comprising:

   a frequency determination unit that determines a modulation frequency of a content signal on a basis of at least any one of a tactile perception characteristic for each presentation site, information regarding a non-modulated signal that is not modulated, and a user state; and
   a modulation unit that performs modulation on the content signal using the modulation frequency.

2. The information processing apparatus according to claim 1, wherein the frequency determination unit performs modulation with the modulation frequency determined by the frequency determination unit in a case where avoidance of perceptual degradation is necessary, and performs modulation with the modulation frequency using a preset desired frequency as the modulation frequency in a case where avoidance of perceptual degradation is not necessary.

3. The information processing apparatus according to claim 1, wherein
   the content signal is at least any one of a tactile signal, an audio signal, and a video signal.

4. The information processing apparatus according to claim 1, wherein
   the user state is a use state of a device worn by a user.

5. The information processing apparatus according to claim 1, wherein
   the frequency determination unit determines the modulation frequency in accordance with a parameter indicating a degree of avoidance of perceptual degradation.

6. The information processing apparatus according to claim 5, wherein
   the parameter is set according to sensor information acquired from a sensor attached to a user.

7. The information processing apparatus according to claim 6, wherein
   the sensor information is at least one of motion state information or adhesion degree information.

8. The information processing apparatus according to claim 5, wherein the parameter is set by an instruction of a user or is set in advance for each of the presentation sites.

9. The information processing apparatus according to claim 1, wherein
   the frequency determination unit determines the modulation frequency on a basis of a frequency range in which a Pacinian corpuscle dominantly responds at the presentation site as the tactile perception characteristic for each presentation site.

10. The information processing apparatus according to claim 1, wherein
    the frequency determination unit determines the modulation frequency on a basis of a bandwidth of the non-modulated signal as the information regarding the non-modulated signal.

11. The information processing apparatus according to claim 1, further comprising

a site information acquisition unit that acquires presentation site information indicating the presentation site, wherein
the frequency determination unit determines the modulation frequency on a basis of a tactile perception characteristic of the presentation site indicated by the presentation site information.

12. The information processing apparatus according to claim 1, further comprising
a non-modulated signal information acquisition unit that acquires information regarding the non-modulated signal.

13. The information processing apparatus according to claim 1, further comprising

a modulation allowable range calculation unit that calculates a modulation allowable range that is a range in which modulation is allowable on a basis of a presentation site information indicating the presentation site and the information regarding the non-modulated signal, wherein
the frequency determination unit determines the modulation frequency on a basis of the modulation allowable range.

14. The information processing apparatus according to claim 11, further comprising

a decoding unit that decodes an encoded signal of the content signal, the encoded signal including at least a presentation site identifier for identifying the presentation site, modulation intensity information, and the non-modulated signal, wherein
the site information acquisition unit acquires the presentation site information by using the presentation site identifier decoded.

15. The information processing apparatus according to claim 14, wherein
the presentation site identifier is set on a basis of at least one of an analysis result of the content signal or other sensor information.

16. The information processing apparatus according to claim 14, wherein
the encoded signal includes information regarding the non-modulated signal.

17. The information processing apparatus according to claim 11, wherein
the site information acquisition unit acquires the presentation site information from a presentation apparatus that presents information corresponding to the content signal.

18. An information processing method in which

an information processing apparatus is configured to
determine a modulation frequency of a content signal on a basis of at least any one of a tactile perception characteristic for each presentation site, information regarding a non-modulated signal that is not modulated, and a user state; and
perform modulation on the content signal using the modulation frequency.

19. A program for causing a computer to function as:

a frequency determination unit that determines a modulation frequency of a content signal on a basis of at least any one of a tactile perception characteristic for each presentation site, information regarding a non-modulated signal that is not modulated, and a user state; and
a modulation unit that performs modulation on the content signal using the modulation frequency.

20. An information processing apparatus comprising
an encoding unit that encodes a content signal and generates an encoded signal including at least information indicating a presentation site, modulation intensity information, and a non-modulated signal that is not modulated.

FIG. 1

# FIG. 2

TACTILE PRESENTATION SYSTEM — 1

PRODUCTION ENVIRONMENT — 11

20-1  20-2  · · ·  20-m

Dc

TACTILE ENCODED DATA

ENCODING APPARATUS — 21

PRESENTATION ENVIRONMENT — 12

TACTILE REPRODUCTION APPARATUS — 22

TACTILE ENCODED DATA Dc

TACTILE PRESENTATION APPARATUS — 23-1

TACTILE PRESENTATION APPARATUS — 23-2

TACTILE PRESENTATION APPARATUS — 23-n

EP 4 722 863 A1

FIG. 3

EP 4 722 863 A1

# FIG. 4

*FIG. 5*

# FIG. 6

| ID | Part |
|----|------|
| 0 | THUMB |
| 1 | INDEX FINGER |
| ... | ... |
| 10 | RIGHT UPPER ARM |
| ... | ... |
| 44 | LEFT SOLE |
| ... | ... |

FIG. 7

# FIG. 8

A

80

$f_0$

$f[Hz]$

$\Rightarrow$   $f = f_0$

B

80

$f_0$

$f_{near}$

$f[Hz]$

$\Rightarrow$   $f = \alpha f_0 + (1-\alpha) f_{near}, 0 \le \alpha \le 1$

EP 4 722 863 A1

*FIG. 9*

# FIG. 10

100 101 102 103   104-1   104-2   ...

100[16bit] : 0xFFFE
101[16bit] : SAMPLING FREQUENCY
102[8bit] : QUANTIZATION ACCURACY
103[16bit] : NUMBER OF SIGNAL SAMPLES
104[-----] : SIGNAL DATA

111 112 113 114 115 116

111[1bit] : SITE ID FLAG
112[16bit] : SITE ID
113[-----] : INTENSITY DATA
114[1bit] : BOUNDARY FREQUENCY FLAG
115[8bit] : BOUNDARY FREQUENCY
116[-----] : NON-MODULATED SIGNAL DATA

## FIG. 11

VIDEO SIGNAL   120

AUDIO SIGNAL   121

122

TACTILE SIGNAL   123

124

132

131

FIG. 12

## FIG. 13

```
                    ┌──────────┐
                    │  START   │
                    └──────────┘
                         │
                         ▼  S11
                 ┌─────────────────┐
                 │     RECEIVE      │
                 └─────────────────┘
                         │
                         ▼  S12
                 ┌─────────────────┐
         ┌──────▶│     DECODE       │
         │       └─────────────────┘
         │               │
         │               ▼  S13              No
         │          ◇ IS THERE SITE ID? ◇──────────────┐
         │               │                             │
         │             Yes│                            │
         │               ▼  S14                        ▼  S15
         │    ┌──────────────────────────┐  ┌──────────────────────────────────┐
         │    │ ACQUIRE TACTILE SITE      │  │ ACQUIRE TACTILE SITE INFORMATION  │
         │    │ INFORMATION FROM SITE ID  │  │ FROM TACTILE REPRODUCTION APPARATUS│
         │    └──────────────────────────┘  └──────────────────────────────────┘
         │               │◀─────────────────────────────┘
         │               ▼  S16
         │    ┌──────────────────────────┐
         │    │  ACQUIRE PACINIAN BAND    │
         │    └──────────────────────────┘
         │               │
         │               ▼  S17              No
         │          ◇ IS THERE BOUNDARY FREQUENCY? ◇──────┐
         │               │                                │
         │             Yes│                               ▼  S18
         │               │                     ┌──────────────────────────┐
         │               │                     │  PERFORM SIGNAL ANALYSIS  │
         │               │                     └──────────────────────────┘
         │               │◀───────────────────────────────┘
         │               ▼  S19
         │    ┌──────────────────────────┐
         │    │ ACQUIRE NON-MODULATED BAND│
         │    └──────────────────────────┘
         │               │
         │               ▼  S20
         │    ┌──────────────────────────────┐
         │    │ CALCULATE MODULATION ALLOWABLE │
         │    │            RANGE               │
         │    └──────────────────────────────┘
         │               │
         │               ▼  S21
         │    ┌──────────────────────────────┐
         │    │ ACQUIRE DESIRED MODULATION     │
         │    │         FREQUENCY              │
         │    └──────────────────────────────┘
         │               │
         │               ▼  S22
         │    ┌──────────────────────────────┐
         │    │ ACQUIRE DEGRADATION AVOIDANCE  │
         │    │           DEGREE               │
         │    └──────────────────────────────┘
         │               │
         │               ▼  S23
         │    ┌──────────────────────────────┐
         │    │ DETERMINE MODULATION FREQUENCY │
         │    └──────────────────────────────┘
         │               │
         │               ▼  S24
         │    ┌──────────────────────────────┐
         │    │ PERFORM MODULATION PROCESSING  │
         │    └──────────────────────────────┘
         │               │
         │    No          ▼  S25
         └─────── ◇ HAVE ALL SIGNALS BEEN DECODED? ◇
                         │
                       Yes│
                         ▼
                    ┌──────────┐
                    │   END    │
                    └──────────┘
```

# FIG. 14

EP 4 722 863 A1

## INTERNATIONAL SEARCH REPORT

| | International application No. |
|---|---|
| | **PCT/JP2024/017718** |

| A. | CLASSIFICATION OF SUBJECT MATTER |
|---|---|

*G06F 3/01*(2006.01)i
FI: G06F3/01 560; G06F3/01 510

According to International Patent Classification (IPC) or to both national classification and IPC

| B. | FIELDS SEARCHED |
|---|---|

Minimum documentation searched (classification system followed by classification symbols)

G06F 3/01, G06F 3/048 - G06F 3/04895

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2018-526722 A (THOMSON LICENSING) 13 September 2018 (2018-09-13) paragraphs [0001]-[0009], [0019]-[0039], fig. 1-12 | 1, 3-4, 17-20 |
| Y | | 11, 14-16 |
| A | | 2, 5-9, 10, 12-13 |
| X | JP 2019-197433 A (FUJITSU LIMITED) 14 November 2019 (2019-11-14) paragraphs [0014]-[0054], fig. 1-3 | 1-3, 10, 12, 18-19 |
| A | | 4-9, 11, 13-17, 20 |
| X | JP 2019-60835 A (MIRAISENS INC.) 18 April 2019 (2019-04-18) paragraphs [0032]-[0052], fig. 2-3 | 1, 3, 9, 18-19 |
| A | | 2, 4-8, 10-17, 20 |
| Y | JP 2018-507485 A (ULTRAHAPTICS IP LTD.) 15 March 2018 (2018-03-15) paragraphs [0042]-[0045], fig. 3 | 11, 14-16 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 722 863 A1**

## INTERNATIONAL SEARCH REPORT

| | International application No. |
|---|---|
| | **PCT/JP2024/017718** |

**C.     DOCUMENTS CONSIDERED TO BE RELEVANT**

| Category* | Citation of document, with indication, where appropriate, of the relevant passages | Relevant to claim No. |
|---|---|---|
| A | JP 2011-183374 A (SANYO ELECTRIC CO., LTD.) 22 September 2011 (2011-09-22) entire text, all drawings | 1-20 |
| A | JP 2006-351012 A (SAMSUNG ELECTRONICS CO., LTD.) 28 December 2006 (2006-12-28) entire text, all drawings | 1-20 |
| A | JP 2019-144629 A (SONY CORPORATION) 29 August 2019 (2019-08-29) entire text, all drawings | 1-20 |
| A | JP 2011-523364 A (KONINKLIJKE PHILIPS ELECTRONICS N.V.) 11 August 2011 (2011-08-11) entire text, all drawings | 1-20 |
| A | US 10916107 B1 (ELWHA LLC) 09 February 2021 (2021-02-09) entire text, all drawings | 1-20 |

Form PCT/ISA/210 (second sheet) (July 2022)

## INTERNATIONAL SEARCH REPORT
### Information on patent family members

International application No.

**PCT/JP2024/017718**

| Patent document cited in search report | | | Publication date (day/month/year) | Patent family member(s) | | | Publication date (day/month/year) |
|---|---|---|---|---|---|---|---|
| JP | 2018-526722 | A | 13 September 2018 | US | 2019/0156639 | A1 | |
| | | | | paragraphs [0001]-[0011], [0030]-[0070], fig. 1-12 | | | |
| | | | | WO | 2017/001293 | A1 | |
| | | | | EP | 3112987 | A1 | |
| | | | | CN | 107710107 | A | |
| | | | | KR | 10-2018-0021722 | A | |
| JP | 2019-197433 | A | 14 November 2019 | (Family: none) | | | |
| JP | 2019-60835 | A | 18 April 2019 | (Family: none) | | | |
| JP | 2018-507485 | A | 15 March 2018 | US | 2016/0246374 | A1 | |
| | | | | paragraphs [0040]-[0043], fig. 3 | | | |
| | | | | WO | 2016/132144 | A1 | |
| | | | | CA | 2976312 | A1 | |
| | | | | KR | 10-2017-0116161 | A | |
| | | | | CN | 107407969 | A | |
| | | | | EP | 3537265 | A1 | |
| JP | 2011-183374 | A | 22 September 2011 | WO | 2011/099554 | A1 | |
| JP | 2006-351012 | A | 28 December 2006 | US | 2006/0279537 | A1 | |
| | | | | KR | 10-2006-0130329 | A | |
| JP | 2019-144629 | A | 29 August 2019 | US | 2021/0004086 | A1 | |
| | | | | WO | 2019/159459 | A1 | |
| JP | 2011-523364 | A | 11 August 2011 | US | 2011/0063208 | A1 | |
| | | | | WO | 2009/136345 | A1 | |
| | | | | KR | 10-2011-0008316 | A | |
| | | | | CN | 102016759 | A | |
| US | 10916107 | B1 | 09 February 2021 | (Family: none) | | | |

Form PCT/ISA/210 (patent family annex) (July 2022)

**REFERENCES CITED IN THE DESCRIPTION**

**Patent documents cited in the description**

- JP 2019067396 A